# EUROPÄISCHE PATENTSCHRIFT

(11) **EP 0 624 610 B1**
(45) Veröffentlichungstag und Bekanntmachung des Hinweises auf die Patenterteilung: **22.09.1999**
(21) Anmeldenummer: 94106802.5
(22) Anmeldetag: 02.05.1994
(51) Int. Cl.: C08F 291/00, C09D 4/06, G03F 7/033, G03F 7/027, C08F 265/06

(54) **Strahlungshärtbare, wässrige Dispersion**
Radiation curable aqueous dispersion
Dispersion aqueuse durcissable par irradiation

(30) Priorität: 12.05.1993 DE 4315831
(43) Veröffentlichungstag der Anmeldung: 17.11.1994
(73) Patentinhaber: BASF Aktiengesellschaft, 67063 Ludwigshafen (DE)
(72) Erfinder: Beck, Erich, Dr., D-69198 Schriesheim (DE); Ley, Gregor, Dr., D-67819 Wattenheim (DE); Gulbins, Erich, Dr., D-69120 Heidelberg (DE); Schlarb, Bernhard, Dr., D-67067 Ludwigshafen (DE); Keil, Edmund, D-67069 Ludwigshafen (DE); Lokai, Matthias, D-67677 Enkenbach-Alsenborn (DE)

(56) Entgegenhaltungen:
- EP-A- 0 321 618
- EP-A- 0 486 278
- US-A- 3 914 165
- US-A- 5 045 435

## Beschreibung

Die Erfindung betrifft die Verwendung von wäßrigen Dispersionen, enthaltend
A) 20 bis 90 Gew.-% eines dispergierten Polymeren mit einer Glasübergangstemperatur oberhalb 30°C welches zu mindestens 40 Gew.-% aufgebaut ist aus sog. Hauptmonomeren, ausgewählt aus C₁-C₂₀-Alkyl(meth)acrylaten, Vinylestern von 1 bis 20 C-Atome enthaltenden Carbonsäuren, Vinylaromaten mit bis zu 20 C-Atomen, ethylenisch ungesättigten Nitrilen mit 3 bis 6 C-Atomen, Vinylhalogeniden, aliphatischen Kohlenwasserstoffen mit 4 bis 8 C-Atomen und mindestens 2 konjugierten Doppelbindungen sowie aliphatischen Kohlenwasserstoffen mit 2-5 C-Atomen und einer Doppelbindung, z. B. Ethylen, und Mischungen dieser Monomere, und
B) 10 bis 80 Gew.-% eines Tri, Tetra, Penta oder Hexa(meth)acrylats eines alkoxylierten, 3 bis 6 wertigen Alkohols mit einem Alkoxylierungsgrad der Hydroxylgruppen des Alkohols, definiert als Quotient der Anzahl der Alkoxygruppen zu der Anzahl der Hydroxylgruppen, d.h. der Wertigkeit des Alkohols vor der Alkoxylierung, von mindestens 0,5,
wobei sich die Gewichtsangaben auf die Summe von A) und B) beziehen und Polymere A) mit einer Säurezahl über 80 ausgeschlossen sind, zur Herstellung von strahlungsgehärteten Beschichtungen.

zur Vermeidung von Lösemittelabfällen werden auch bei der Strahlungshärtung zunehmend wäßrige Systeme eingesetzt. Solche wäßrigen Systeme eignen sich gut zur Herstellung von Beschichtungen, z.B. auch offenporiger, matter Holzlackierungen und zeigen i.a. gute Haftungseigenschaften. Vorwiegend finden wäßrige Emulsionen von ungesättigten Polyestern oder Polyester(meth)acrylaten als strahlungshärtbare Lacke Verwendung. Nach dem Abdunsten des Wassers werden flüssige bis klebrige Filme gebildet, die durch Bestrahlung gehärtet werden. Bei stark strukturiert, nichtflächigen Substraten, z.B. Profilleisten, Stühlen, ist oftmals eine vollständige Bestrahlung der beschichteten Flächen wegen Schattenbildung nicht möglich. Diese Schattenstellen bleiben dann klebrig.

Für viele Anwendungen sind daher strahlungshärtbare Dispersionen gewünscht, die ohne Bestrahlung weitgehend klebfrei trocknen. Andererseits sollen die strahlungshärtbaren Dispersionen einen guten Verlauf haben, d.h. sich auf der zu beschichtenden Oberfläche gleichmäßig ohne Verlaufsstörungen verteilen und eine geringe Filmbildetemperatur aufweisen.

Aus der EP-A-486 278 sind strahlungshärtbare Dispersionen bekannt, welche ein nicht strahlungshärtbares Emulsionspolymerisat und strahlungshärtbare (Meth)acrylsäureester enthalten.

Aus US-A-5 045 435 sind Mischungen aus mehrfunktionellen Acrylatmonomeren und Polymerlatices bekannt, welche in der Photoresist-Technik verwendet werden.

Mit diesen Dispersionen können die oben genannten Anforderungen an strahlungshärtbare Dispersionen noch nicht zufriedenstellend erfüllt werden.

Aufgabe der vorliegenden Erfindung waren daher strahlungshärtbare Dispersionen, welche bei der Beschichtung von Oberfläche einen guten Verlauf zeigen und vor der Bestrahlung weitgehend klebfrei trocknen.

Die Aufgabe wurde gelöst durch die oben definierte Verwendung.

Die wäßrige Dispersion enthält vorzugsweise 40-85 Gew.-% des dispergierten Polymeren A) und vorzugsweise 15-60 Gew.-% der (Meth)acrylate B). Die Gewichtsangaben beziehen sich auf die Summe des dispergierten Polymeren und der (Meth)acrylate.

Das Polymere ist besonders bevorzugt zu mindestens 60 Gew.-%, ganz besonders bevorzugt zu mindestens 80 Gew.-% aufgebaut aus sog. Hauptmonomeren, ausgewählt aus C₁-C₂₀-Alkyl(meth)acrylaten, Vinylestern von 1 bis 20 C-Atome enthaltenden Carbonsäuren, Vinylaromaten mit bis zu 20 C-Atomen, ethylenisch ungesättigten Nitrilen mit 3 bis 6 C-Atomen, Vinylhalogeniden, aliphatischen Kohlenwasserstoffen mit 4 bis 8 C-Atomen und mindestens 2 konjugierten Doppelbindungen sowie aliphatischen Kohlenwasserstoffen mit 2-5 C-Atomen und einer Doppelbindung, z.B. Ethylen, und Mischungen dieser Monomere.

Vorzugsweise zu nennen sind C₁-C₈-Alkyl(meth)acrylsäureester wie Methyl(meth)acrylat, Ethyl(meth)acrylat, n und iso-Propyl(meth)acrylat, n-Butyl(meth)acrylat und 2-Ethylhexyl(meth)acrylat, Vinylester wie Vinylacetat und Vinylpropionat, Styrol und α-Methylstyrol als Vinylaromaten, Vinylhalogenide wie Vinylchlorid oder Vinylidenchlorid und Butadien sowie Isopren als Diolefin.

Besonders bevorzugt sind C₁-C₈-Alkyl(meth)acrylate und Styrol, sowie deren Mischungen als Hauptmonomere.

Weitere Monomere, welche vorzugsweise zu 0-40 Gew.-%, besonders bevorzugt zu 0-20 Gew.-% im Polymer enthalten sein können, sind z.B. C₁-C₁₀-Hydroxyalkyl(meth)acrylate, (Meth)acrylsäure, (Meth)acrylamid, Glycidyl(meth)acrylat, Maleinsäure, Fumarsäure und deren Anhydride. Besonders bevorzugt sind (Meth)acrylsäure und Glycidyl(meth)acrylat.

Die Monomeren, aus denen das Polymer aufgebaut ist, werden so gewählt, daß das Polymer eine Glasübergangstemperatur oberhalb 30°C, vorzugsweise oberhalb 60°C aufweist.

Die Glasübergangstemperatur des Copolymerisats läßt sich nach üblichen Methoden wie Differentialthermoanalyse oder Differential Scanning Calorimetrie (s. z.B. ASTM 3418/82, sog. "midpoint temperature") bestimmen.

Das Polymer kann z.B. durch Lösungspolymerisation oder Massepolymerisation mit anschließender Dispergierung in wasser oder vorzugsweise durch Emulsionspolymerisation in wasser hergestellt werden.

Die Monomeren können bei der Emulsionspolymerisation wie üblich in Gegenwart eines wasserlöslichen Initiators und eines Emulgators bei vorzugsweise 30 bis 95°C polymerisiert werden.

Geeignete Initiatoren sind z.B. Natrium-, Kalium- und Ammoniumpersulfat, tert.-Butylhydroperoxide, wasserlösliche Azoverbindungen oder auch Redoxinitiatoren.

Als Emulgatoren dienen z.B. Alkalisalze von längerkettigen Fettsäuren, Alkylsulfate, Alkylsulfonate, alkylierte Arylsulfonate oder alkylierte Biphenylethersulfonate. Des weiteren kommen als Emulgatoren Umsetzungsprodukte von Alkylenoxiden, insbesondere Ethylen- oder Propylenoxid mit Fettalkoholen, -säuren oder Phenol, bzw. Alkylphenolen in Betracht.

Zur Einstellung des Molekulargewichts können bei der Polymerisation Regler eingesetzt werden. Geeignet sind z. B. -SH enthaltende Verbindungen wie Mercaptoethanol, Mercaptopropanol, Thiophenol, Thioglycerin, Thioglykolsäureester, Thioglykolsäuremethylester und tert.-Dodecylmercaptan.

Die erfindungsgemäße Dispersion enthält neben den Polymeren (A) Tri-Hexa(meth)acrylate B).

Die Tri-Hexa(meth)acrylate sind erhältlich durch Alkoxylierung von 3 bis 6 wertigen Alkoholen, insbesondere Alkoholen mit 3 bis 20 C-Atomen, z.B. Trimethylolpropan, Glycerin, Ditrimethylolpropan, Pentaerythrit, Sorbit, Dipentaerythrit mit Alkoxiden, insbesondere Ethylenoxid und Propylenoxid, und anschließende Veresterung mit soviel (Meth)acrylsäure, daß 3 bis 6 (Meth)acrylgruppen im Molekül vorhanden sind.

Die Herstellung der (Meth)acrylate ist als solche bekannt und z.B. in der US-A-3 380 831 beschrieben.

Der Alkoxylierungsgrad des 3 bis 6 wertigen Alkohols, definiert als Zahl der insgesamt vorhandenen Alkoxygruppen geteilt durch die Zahl der Hydroxylgruppen, d.h. der Wertigkeit des Alkohols vor der Alkoxylierung, beträgt mindestens 0,5 und vorzugsweise maximal 20. Besonders bevorzugt sind Alkoxylierungsgrade von 0,5 bis 10 und ganz besonders bevorzugt von 0,7 bis 7.

Bevorzugte Tri-Hexa(meth)acrylate sind solche der Formel 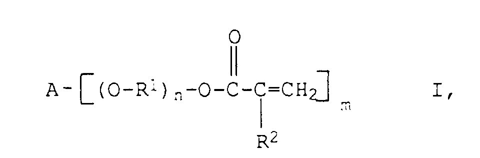 in der A für einen organischen Rest mit 3 bis 20, vorzugsweise 3 bis 10 C-Atomen, R¹ für eine C₁-C₆-, vorzugsweise C₂-C₃-Alkylengruppe, R² für ein Wasserstoffatom oder eine Methylgruppe, n für eine ganze Zahl von 0 bis 10 und m für eine ganze Zahl von 3 bis 6 steht.

Die (Meth)acrylgruppen in den (Meth)acrylaten B) können auch zum Teil mit primären oder sekundären Aminen zu einem Michaeladdukt umgesetzt sein, wie auch in der US-A-39 14 165 beschrieben ist.

Als primäre oder sekundäre Amine, welche sich zu Michaeladdukten an Doppelbindungen addieren, kommen z.B. heterocyclische Verbindungen wie Piperazin, 1-Ethylpiperazin, N-(Aminoethyl)-imidazol, Morpholin, N-(Aminoethyl)-morpholin sowie primäre oder sekundäre Amine, die durch aliphatische und/oder aromatische Gruppen substituiert sind, in Betracht. Bevorzugt sind aliphatische primäre oder sekundäre Amine, die durch ein oder zwei C₁-C₆-Alkylgruppen oder C₁-C₆-Hydroxylalkylgruppen substituiert sind. Besonders bevorzugt sind primäre oder sekundäre Amine, die durch eine oder zwei C₁-C₄-Alkylgruppen substituiert sind. Ganz besonders bevorzugt sind Dibutylamin und Morpholin.

Vorzugsweise liegen maximal bis zu 50, besonders bevorzugt bis zu 25 Mol-% der Doppelbindungen der (Meth)acrylate in Form von Michaeladdukten mit primären oder sekundären Aminen vor.

Die (Meth)acrylate B) können zu den bei der Herstellung der Polymeren A) erhaltenen wäßrigen Dispersionen gegeben und mit diesen durch einfache Maßnahmen vermischt werden. zur Dispergierung der (Meth)acrylate können auch Schutzkolloide, z.B. Polyvinylpyrrolidon, Copolymerisate aus Vinylpropionat bzw. -acetat und Vinylpyrrolidon, Copolymerisate aus (Meth)acrylsäure, (Meth)acrylester und (Meth)acrylnitril, Polyvinylalkohole mit unterschiedlichem Restacetatgehalt, Cellulosether, Gelatine oder Mischungen dieser Stoffe zugesetzt werden. Besonders bevorzugte Schutzkolloide sind Polyvinylalkohol mit einem Restacetatgehalt von unter 35, insbesondere 5 bis 30 mol.-% und/oder ein Vinylpyrrolidon-/Vinylpropionat-Copolymeres mit einem Vinylestergehalt von unter 35, insbesondere 5 bis 30 Gew.-%.

Der Feststoffgehalt der Dispersion kann entsprechend der gewünschten Viskosität eingestellt werden. Im allgemeinen liegt der Feststoffgehalt zwischen 20 und 80, insbesondere zwischen 20 und 70 Gew.-%.

Die Dispersionen eignen sich als Beschichtungsmittel und können weitere Zusätze, z.B. Pigmente, Farbstoffe, Füllstoffe und in der Lacktechnologie übliche Hilfsmittel enthalten.

Zur Strahlungshärtung durch UV-Licht werden den Dispersionen im allgemeinen Photoinitiatoren zugesetzt.

Als Photoinitiatoren in Betracht kommen z.B. Benzophenon, Alkylbenzophenone, halogenmethylierte Benzophenone, Michlers Keton, 2-Hydroxyacetophenon und halogenierte Benzophenone. Ferner eignen sich Benzoin und seine Derivate. Ebenfalls wirksame Photoinitiatoren sind Anthrachinon und zahlreiche seiner Derivate, beispielsweise β-Methylanthrachinon, tert.-Butylanthrachinon und Anthrachinoncarbonsäureester und insbesondere Acylphosphinoxide, z.B. Lucirin® TPO.

Die Photoinitiatoren, die je nach Verwendungszweck der erfindungsgemäßen Massen in Mengen zwischen 0,1 und 15 Gew.-%, vorzugsweise, 0,1 bis 10 Gew.-%, bezogen auf die polymerisierbaren Komponenten, eingesetzt werden, können als einzelne Substanz oder, wegen häufiger vorteilhafter synergistischer Effekte, auch in Kombination miteinander verwendet werden.

Vorteilhafte Zusätze, die zu einer weiteren Steigung der Reaktivität führen können, sind bestimmte tert. Amine wie z.B. Triethylamin und Triethanolamin. Auch sie können in Mengen bis zu 5 Gew.-%, bezogen auf die polymerisierbaren Komponenten, eingesetzt werden.

Zu erwähnen ist abschließend noch, daß die Dispersionen auch thermisch vernetzt werden können. Hierbei ist der Zusatz von Initiatoren, die bei erhöhten Temperaturen Radikale bilden, notwendig. Verwendbar sind z.B. Dibenzoylperoxid, Cumolhydroperoxid oder Azodiisobuttersäuredinitril. Weitere Beispiele für geeignete Initiatoren sind in "Polymer handbook", 2. Ausgabe, Wiley & Sony, New York beschrieben.

Die Dispersionen werden für die Herstellung von strahlungsgehärteten Beschichtungen verwendet.

Sie können z.B. durch Spritzen, Gießen, Walzen, Drucken oder Rakeln auf Substrate wie Metall, Kunststoff, Glas, Holz, Papier, Pappe, Leder oder Textil aufgebracht werden.

Bei der Strahlungshärtung werden die Überzüge im allgemeinen bis zu 30 min bei Temperaturen bis zu 100°C vorgeheizt und anschließend kurzzeitig einer UV- oder energiereichen Elektronenstrahlung ausgesetzt. Hierzu werden die üblicherweise für die Härtung von Überzügen eingesetzten UV- bzw. Elektronenstrahlungsquellen verwendet.

Bei porösen Substraten, wie beispielsweise Leder, Papier, Holz, sind nur sehr kurze Vorheizzeiten erforderlich, da die Hauptmenge des Wassers vom Untergrund aufgenommen wird; bisweilen kann auf ein Vorheizen ganz verzichtet werden.

Die Dispersionen zeigen einen guten Verlauf, lassen sich daher gleichmäßig, ohne Verlaufsstörungen auf Oberflächen auftragen. Schon vor der Aushärtung mit UV oder Elektronenstrahlung sind die Oberflächen weitgehend klebfrei.

Die nach der Aushärtung erhaltenen Beschichtungen zeigen gute mechanische Eigenschaften, insbesondere gute elastische Eigenschaften und eine sehr gute Beständigkeit gegen Chemikalien. Die Filmbildetemperatur der erfindungsgemäßen Dispersion ist gegenüber herkömmlichen Dispersionen erniedrigt. So kann Energie, bzw. Filmbildehilfsmittel eingespart und wärmeempfindliche Substrate können schonend lackiert werden. Des weiteren sind durch (Meth)acrylate B) in den Dispersionen bisher eingesetzte niedermolekularen(Meth)acrylate, welche oft eine hautreizende Wirkung zeigen, ersetzt.

### Beispiele

### Beispiele 1

Die verwendete, wäßrige Dispersion enthält
A)
   70 Gew.-% eines Polymeren aus
   20 Gew.-% Styrol
   32,5 Gew.-% n-Butylacrylat und
   32,5 Gew.-% Methylmethacrylat
   10 Gew.-% Glycidylmethacrylat
B) 30 Gew.-% Trimethylolpropantriethoxytriacrylat (Alkoxylierungsgrad 1)

(Gewichtsangaben bezogen auf A) + B))

Die Dispersion hatte einen Feststoffgehalt von 50 Gew.-%, eine Viskosität von 40 mPas (Kegel-Platte-Viskosimeter, 23°C) und eine Mindestfilmbildetemperatur (DIN 53787) von 44°C.

Die Dispersion wurde mit 4 Gew.-%, bezogen auf den Feststoff mit Irgacure® 500 (Ciba-Geigy) abgemischt und 12 Stunden vor Verarbeitung gelagert. Mit einem Rakel aufgezogenen Filme wurden bei 60°C über 20 min im Trockenschrank getrocknet. Die Filme waren trocken, klar, hochglänzend und zeigten keine Verlaufsstörungen. Anschließend wurden die Filme unter einer Hochdruck-Quecksilber-Lampe auf einem Transportband mit einer Bandgeschwindigkeit von 5 m/min belichtet, dabei änderte sich das Filmaussehen nicht. Es verbesserten sich die, die chemischen Beständigkeiten und mechanischen Eigenschaften. Die Filme waren bei 60°C klebfrei.

| Eigenschaften der Beschichtungen nach UV-Belichtung: | |
|---|---|
| Pendeldämpfungshärte (DIN 53157) | 57 sec |
| Erichsentiefung (DIN 53156) | > 10 mm |
| Gitterschnittprüfung auf Stahlblech (DIN 53151) | sehr gut |
| Chemikalienbeständigkeiten nach DIN 68860 B | erfüllt |

### Beispiel 2

Die verwendete wäßrige Dispersion enthielt
A)
   70 Gew.-% eines Polymeren aus
   20 Gew.-% Styrol
   30 Gew.-% Methylmethacrylat
   40 Gew.-% n-Butylacrylat
   10 Gew.-% Glycidylmethacrylat
B) 30 Gew.-% Trimethylolpropanpropoxiethoxytriacrylat

Die Dispersion hatte einen Feststoffgehalt von 50 Gew.-% und eine Viskosität von 35 mPas.

Entsprechend Beispiel 1 wurden Filme erhalten, die schon ohne Bestrahlung klebfrei, klar und glänzend sind.

| Eigenschaften der Beschichtungen nach UV-Belichtung: | |
|---|---|
| Pendeldämpfungshärte (DIN 53157) | 59 sec |
| Erichsentiefung (DIN 53156) | > 10 mm |
| Gitterschnittprüfung auf Stahlblech (53151) | sehr gut |
| Chemikalienbeständigkeiten nach DIN 68860 B | erfüllt |

### Vergleichsbeispiel 1

Vergleichsbeispiel 1 entsprach Beispiel 1, mit der Ausnahme, daß Trimethylolpropantriethoxytriacrylat durch Trimethylolpropantriacrylat ersetzt wurde.

Die Dispersion hatte einen Feststoffgehalt von 49,7 Gew.-% und eine Viskosität von 55 mPas. Die Mindestfilmbildetemperatur lag oberhalb 65°C.

Die erhaltenen Beschichtungen nach UV-Belichtung waren spröde und rissig, so daß weitere Lackfilmeigenschaften nicht prüfbar waren.

### Vergleichsbeispiel 2

Vergleichsbeispiel 2 entsprach Beispiel 1 mit der Ausnahme, daß Trimethylolpropantriethoxytriacrylat durch Tripropylenglycoldiacrylat ersetzt wurde.

Die Dispersion hatte einen Feststoffgehalt von 47,5 Gew.-% und eine Viskosität von 45 mPas.

Die unbestrahlten Filme waren noch klebrig.

| Eigenschaften der Beschichtungen nach UV-Belichtung: | |
|---|---|
| Pendeldämpfungshärte (DIN 53157) | 24 sec |
| Erichsentiefung (DIN 53156) | > 10 mm |
| Gitterschnittprüfung auf Bonder 26 (53151) | sehr gut |
| Chemikalienbeständigkeiten nach DIN 68860 B | erfüllt |

## Patentansprüche

1. Verwendung von wäßrigen Dispersionen, enthaltend
A) 20 bis 90 Gew.-% eines dispergierten Polymeren mit einer Glasübergangstemperatur oberhalb 30°C welches zu mindestens 40 Gew.-% aufgebaut ist aus sog. Hauptmonomeren, ausgewählt aus C₁-C₂₀-Alkyl(meth)acrylaten, Vinylestern von 1 bis 20 C-Atome enthaltenden Carbonsäuren, Vinylaromaten mit bis zu 20 C-Atomen, ethylenisch ungesättigten Nitrilen mit 3 bis 6 C-Atomen, Vinylhalogeniden, aliphatischen Kohlenwasserstoffen mit 4 bis 8 C-Atomen und mindestens 2 konjugierten Doppelbindungen sowie aliphatischen Kohlenwasserstoffen mit 2-5 C-Atomen und einer Doppelbindung, z. B. Ethylen, und Mischungen dieser Monomere, und
B) 10 bis 80 Gew.-% eines Tri, Tetra, Penta oder Hexa(meth)acrylats eines alkoxylierten, 3 bis 6 wertigen Alkohols mit einem mittleren Alkoxylierungsgrad der Hydroxylgruppen des Alkohols, definiert als Quotient der Anzahl der Alkoxygruppen zu der Anzahl der Hydroxyl; gruppen, d.h. der Wertigkeit des Alkohols vor der Alkoxylierung, von mindestens 0,5,
wobei sich die Gewichtsangaben auf die Summe von A) und B) beziehen und Polymere A) mit einer Säurezahl über 80 ausgeschlossen sind, zur Herstellung von strahlungsgehärteten Beschichtungen.

2. Verwendung nach Anspruch 1, wobei es sich bei den Tri-Hexa(meth)acrylaten B) um solche der Formel 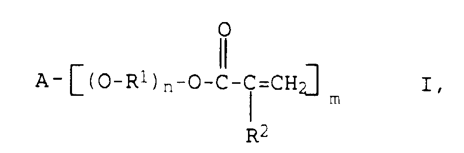 in der A für einen organischen Rest mit 3 bis 20 Kohlenstoffatomen, R¹ für eine C₁-C₆ Alkylengruppe, R² für ein Wasserstoffatom oder eine Methylgruppe, n für eine ganze Zahl von 0 bis 20 und m für eine ganze Zahl von 3 bis 6 steht, handelt.

3. Verwendung nach Anspruch 1 oder 2, wobei maximal 50 Mol.-% der Doppelbindungen in den (Meth)acrylaten B) mit primären oder sekundären Aminen ein Michaeladdukt bilden.

4. Verwendung nach einem der Ansprüche 1 bis 3, wobei die Glasübergangstemperatur der Polymeren A) oberhalb 60°C liegt.

## Claims

1. The use of an aqueous dispersion containing
A) from 20 to 90% by weight of a dispersed polymer having a glass transition temperature above 30°C which comprises at least 40% by weight of main monomers, selected from C₁-C₂₀-alkyl (meth)-acrylates, vinyl esters of carboxylic acids of 1 to 20 carbon atoms, vinylaromatics of up to 20 carbon atoms, ethylenically unsaturated nitriles of 3 to 6 carbon atoms, vinyl halides, aliphatic hydrocarbons having 4 to 8 carbon atoms and at least 2 conjugated double bonds and aliphatic hydrocarbons having 2-5 carbon atoms and one double bond, e.g. ethylene, and mixtures of these monomers, and
B) from 10 to 80% by weight of a tri-, tetra-, penta- or hexa(meth)acrylate of an alkoxylated, trivalent to hexavalent alcohol having a mean degree of alkoxylation of the hydroxyl groups of the alcohol, defined as the quotient of the number of alkoxy groups to the number of hydroxyl groups, ie. the functionality of the alcohol prior to the alkoxylation, of at least 0.5,
the stated weights being based on the sum of A) and B) and polymers A) having an acid number above 80 being excluded, for the production of radiation-curable coatings.

2. The use as claimed in claim 1, wherein the trihexa(meth)acrylates B) are those of the formula 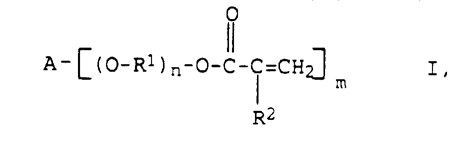 where A is an organic radical of 3 to 20 carbon atoms, R¹ is C₁-C₆-alkylene, R² is hydrogen or methyl, n is an integer from 0 to 20 and m is an integer from 3 to 6.

3. The use as claimed in claim 1 or 2, wherein not more than 50 mol % of the double bonds in the (meth)-acrylates B) form a Michael adduct with primary or secondary amines.

4. The use as claimed in any of claims 1 to 3, wherein the glass transition temperature of the polymers A) is above 60°C.

## Revendications

1. Utilisation de dispersions aqueuses, contenant
A) 20 à 90% en poids d'un polymère dispersé ayant une température de transition vitreuse supérieure à 30°C, lequel est formé à partir d'au moins 40% en poids des monomères principaux choisis parmi les (méth)acrylates d'alkyle en C₁ à C₂₀, les esters vinyliques d'acides carboxyliques contenant 1 à 20 atomes de C, les composés vinylaromatiques ayant jusqu'à 20 atomes de C, les nitriles à insaturation éthylénique ayant 3 à 6 atomes de C, les halogénures de vinyle, les hydrocarbures aliphatiques ayant 4 à 8 atomes de C et au moins 2 doubles liaisons conjuguées ainsi que les hydrocarbures aliphatiques ayant 2 à 5 atomes de C et une double liaison, par exemple l'éthylène, et les mélanges de ces monomères, et
B) 10 à 80% en poids d'un tri-, tétra-, penta- ou hexa(méth)acrylate d'un alcool alcoxylé, de fonctionnalité 3 à 6, ayant un degré moyen d'alcoxylation des groupes hydroxyle de l'alcool d'au moins 0,5, défini comme étant le quotient du nombre de groupes alcoxy par le nombre des groupes hydroxyle, à savoir la fonctionnalité de l'alcool avant l'alcoxylation,
les indications pondérales se rapportant à la somme de A) et B) et en excluant les polymères A) ayant un indice d'acide supérieur à 80, pour la production de revêtements durcissables par rayonnement.

2. Utilisation selon la revendication 1, dans laquelle les tri-hexa(méth)acrylates B) en question sont ceux de formule 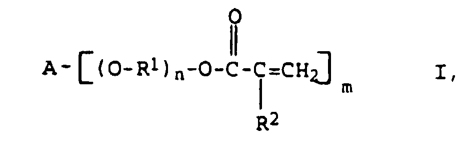 dans laquelle A représente un résidu organique ayant 3 à 20 atomes de carbone, R¹ représente un groupe alkylène en C₁ à C₆, R² représente un atome d'hydrogène ou un groupe méthyle, n représente un nombre entier de 0 à 20 et m représente un nombre entier de 3 à 6.

3. Utilisation selon la revendication 1 ou 2, dans laquelle au maximum 50% en moles des doubles liaisons dans les (méth)acrylates B) forment un adduit de Michael avec des amines primaires ou secondaires.

4. Utilisation selon l'une quelconque des revendications 1 à 3, dans laquelle la température de transition vitreuse des polymères A) est supérieure à 60°C.
